**Europäisches Patentamt**

**European Patent Office**

**Office européen des brevets**

(11) Veröffentlichungsnummer: **0 213 517**
A2

(12) **EUROPÄISCHE PATENTANMELDUNG**

(21) Anmeldenummer: **86111328.0**

(22) Anmeldetag: **16.08.86**

(51) Int. Cl.⁴: **B 32 B 5/20**
**B 32 B 31/12**

(30) Priorität: **31.08.85 DE 3531248**

(43) Veröffentlichungstag der Anmeldung:
**11.03.87 Patentblatt 87/11**

(84) Benannte Vertragsstaaten:
**AT BE CH DE FR GB IT LI LU NL SE**

(71) Anmelder: **DYNAMIT NOBEL AKTIENGESELLSCHAFT**
**Postfach 1261**
**D-5210 Troisdorf, Bez. Köln(DE)**

(72) Erfinder: **Breitscheidel, Hans-Ulrich**
**Kapellenstrasse 43a**
**D-5200 Siegburg(DE)**

(72) Erfinder: **Kautz, Rudolf**
**Drosselweg 5**
**D-5202 Hennef 1(DE)**

(54) Verfahren zur Herstellung einer zur direkten Kaschierung mit weiteren Bahnen oder Matten geeigneten Schaumstoffbahn oder -matte.

㊾ Es wird ein Verfahren beschrieben zur Herstellung von mit Schmelzkleberschichten versehenen Schaumstoffbahnen oder -matten. Dabei wird eine ungeschaumte Polymer-Matrix mit einer Schmelzkleberfolie kaschiert und anschließend thermisch aufgeschäumt. Beim Schäumen vergrößert sich die Fläche der Schmelzkleberfolie entsprechend der Oberfläche der Matrix. Die so hergestellten, mit einem Schmelzkleberfilm versehenen Schaumstoffbahnen oder -matten eignen sich zur direkten Kaschierung mit weiteren Polymerfolien oder Schaumstoffen auch aus solchen Materialien, die sich gewöhnlich nicht zur direkten Kaschierung mit dem Schaumstoffmaterial eignen.

Fig. 1

Troisdorf, den 26. 8. 1985
OZ 85061      Wu/Bd

- 2 -

DYNAMIT NOBEL AKTIENGESELLSCHAFT
Troisdorf Bez. Köln

Verfahren zur Herstellung einer zur direkten Kaschierung mit
weiteren Bahnen oder Matten geeigneten Schaumstoffbahn oder
—matte

Die Erfindung betrifft ein Verfahren gemäß dem Oberbegriff des
Anspruchs 1.

Schaumstoffbahnen oder —matten werden wegen ihrer spezifischen
Eigenschaften - z.B. geringe Wärmeleitfähigkeit, gutes Schalldämmvermögen, gutes Stoßdämpfungsverhalten und geringe Rohdichte -
in großem Umfang eingesetzt.

Schaumstoffbahnen oder —matten werden beispielsweise kontinuierlich bzw. diskontinuierlich durch thermisches Aufschäumen aus
einer sogenannten Matrix hergestellt, wobei diese Matrix aus
einem im allgemeinen  extrudierten,kompakten Thermoplasten
besteht, der physikalisch oder chemisch wirkende Treibmittel
enthält. Diese Matrizes werden, beispielsweise in einem Durchlaufofen, erwärmt auf Temperaturen, die ein Verschäumen
der Matrix bewirken. Hierbei entsteht eine zellige Struktur, die
je nach verwendetem Ausgangsmaterial geschlossen- oder offenzellig
und vernetzt oder unvernetzt sein kann.

Zur Verbesserung der spezifischen Schaumstoff-Materialeigenschaften ist es gebräuchlich, Schaumstoffbahnen oder -matten aus verschiedenen Schaumstoffen flächenhaft zu verbinden, um so einen Schaumstoffverbund zu erhalten. Weiterhin ist es gebräuchlich, Schaumstoffbahnen mit Folien oder Platten flächenhaft zu kaschieren.

Ein preiswertes und weit verbreitetes Verfahren zum Verbinden verschiedener Schaumstoffbahnen untereinander oder mit Folien bzw. Platten ist das sogenannte Flammkaschieren, bei dem die einzelnen Bahnen beispielsweise mit einer offenen Flamme an der Oberfläche kurzzeitig angeschmolzen und in dem hierdurch bewirkten klebrigen Zustand unter Druckeinwirkung flächig miteinander verbunden werden. Voraussetzung für dieses Verfahren ist es, daß die zu verbindenden Schichten aus miteinander kompatiblen Materialien bestehen, die bei oberflächiger Erwärmung aneinander haften und sich so dauerhaft miteinander verbinden lassen.

Ein Flammkaschieren ist hingegen nicht oder nur schwer möglich bei solchen Materialpaarungen, die nicht kompatibel sind, beispielsweise beim Verbinden von Polyethylenschäumen mit PVC-Schäumen oder beim Verbinden von Folien und Schäumen entsprechender Materialpaarungen.

Es sind bereits Verfahren bekannt, auch solche nicht kompatiblen Materialien miteinander zu verbinden. Hierzu wird beispielsweise einer der beiden Materialien mit einem Haftkleber oder ähnlichem bestrichen und anschließend mit dem anderen Material flächig verbunden. Solche Klebekaschierungen sind einerseits relativ teuer und verursachen andererseits erhebliche Handhabungsprobleme. Es ist auch bekannt, Schaumstoffe an der Oberfläche mit einer Schmelzkleberfolie zu kaschieren, um die so vorbehandelte Schaumstoffbahn anschließend mit Deckfolien oder weiteren Schaumstoffbahnen durch Flammkaschieren zu verbinden. Dieses Verfahren erweist sich als relativ teuer, da die Herstellung der Schmelzkleberfolie aufwendig und somit kostenintensiv ist. Die Schmelzkleberfolien lassen sich auch nur in bestimmten Mindestdicken herstellen, so daß diese Folien den späteren Verbund unter Umständen negativ beeinflussen können, beispielsweise in Bezug auf das Dampfdiffusionsverhalten. Schließlich bedingt das Aufbringen einer Schmelzkleberfolie einen zusätzlichen Arbeitsgang.

Aufgabe der Erfindung ist es, eine Schaumstoffbahn oder -matte durch thermisches Aufschäumen herzustellen, die sich zur direkten Kaschierung, insbesondere Flammkaschierung, mit weiteren Bahnen oder Matten auch aus solchen Materialien eignet, die sich gewöhnlich nicht zur direkten Kaschierung mit der Schaumstoffbahn oder -matte eignen. Das Verfahren zur Herstellung solcher Schaumstoffbahnen oder -matten soll weiterhin einfach und kostengünstig sein, zusätzlich soll die Handhabung der so hergestellten Schaumstoffbahn oder -matte unproblematisch sein.

Erfindungsgemäß wird diese Aufgabe dadurch gelöst, daß eine im wesentlichen aus einem polymeren Material A bestehende Matrix mit einer geeigneten, handelsüblichen Schmelzkleberfolie auf wenigstens einer ihrer Oberflächen kaschiert, d.h. flächenhaft verbunden wird und anschließend, z.B. in einem Schäumofen, nach bekannten Verfahren aufgeschäumt wird. Es ist bemerkenswert, daß sich die Schmelzkleberfolie bei diesem Schäumvorgang ohne weitere äußere Beeinflussung flächig entsprechend der sich vergrößernden Matrixoberfläche mit vergrößert, wobei die Dicke der Schicht entsprechend gleichmäßig verringert wird. Auf der so hergestellten Schaumstoffbahn bzw. -matte entsteht auf diese Weise ein sehr dünner, gleichwohl für die spätere Kaschierung mit weiteren Bahnen hervorragend geeigneter, sehr gleichmäßiger Schmelzkleberfilm.

Die nach dem erfindungsgemäßen Verfahren hergestellten, im wesentlichen aus dem polymeren Material A bestehenden Schaumstoffbahnen bzw. -matten eignen sich vorzüglich zur direkten Kaschierung, insbesondere Flammkaschierung mit weiteren Bahnen oder Matten auch aus solchen Materialien, die sich gewöhnlich zur direkten Kaschierung mit Schaumstoffbahnen oder -matten aus dem Material A nicht eignen.

Die Kaschiergeschwindigkeit bei erfindungsgemäß hergestellten Schaumstoffbahnen oder -matten liegt dabei um ca. 50 % bis 100 % höher als die Kaschiergeschwindigkeit bei nach dem Stand der Technik durch nachträgliches Aufkaschieren einer Schmelzkleberfolie hergestellten Schaumstoffbahnen oder -matten.

Die Schmelzkleberfolien, die für das erfindungsgemäße Kaschieren der Schaumstoffmatrix verwendet werden, werden entsprechend dem Stand der Technik in Abhängigkeit von dem polymeren Material A und dem zur späteren Beschichtung vorgesehenen Material B ausgewählt. Im allgemeinen wählt man dabei eine Folie aus einem dritten Material C, das einerseits gute Hafteigenschaften mit dem Material A und andererseits gute Hafteigenschaften mit dem Material B aufweist.

Ein wichtiger Vorteil des erfindungsgemäßen Verfahrens ist es, daß für die Kaschierung der Schaumstoffmatrix mit dem Schmelzkleber nur eine Fläche des Schmelzklebers benötigt wird, die der Fläche der Schaumstoffmatrix entspricht. Hingegen wird bei der Kaschierung der fertig geschäumten Schaumstoffbahnen mit Schmelz-kleberfolien, wie sie nach dem Stand der Technik bekannt ist, eine um den Faktor 2,5 bis 15 größere Fläche der Schmelzkleberfolien benötigt. Somit ergibt sich eine Materialersparnis gegenüber den bekannten Kaschierungsverfahren von 60 bis 93 %, abhängig vom Verschäumungsgrad der Matrix und bezogen auf die Schmelzkleberfolien-Fläche. In der Praxis wird eine Materialersparnis von bis zu 80 % der Schmelzkleberfolienmasse erreicht, da die Schmelzkleberfolie bei dem erfindungsgemäßen Verfahren eine gewisse Mindestdicke nicht unterschreiten sollte.

Als weiterer Vorteil des erfindungsgemäßen Verfahrens ist anzusehen, daß durch die Schmelzkleberfolien-Kaschierung der Matrix die Treibmittelverluste während des Schäumens gesenkt werden, so daß der Materialeinsatz des Treibmittels ggf. gesenkt werden kann.

- 6 -

Schließlich ermöglicht das erfindungsgemäße Verfahren die Herstellung von Schaumstoffbahnen oder -matten, die bei der späterer Flammkaschierung mit weiteren Bahnen oder Matten eine so hohe Festigkeit der Verbindung erreichen, die weit über derjenigen liegt, die nach dem Stand der Technik erreichbar war.

Die Schmelzkleberfolien können vorteilhaft bereits während der Herstellung der Schaumstoffmatrix auf diese kaschiert werden, indem beispielsweise beim Glätten der Schaumstoffmatrix nach dem Extrudieren die Schmelzkleberfolie unter Ausnutzung der Restwärme der Matrix auf diese aufkaschiert wird. Die so entstehende Verbindung zwischen Schaumstoffmatrix und Schmelzkleberfolie reicht aus, um während des späteren Schäumens der Matrix ein Haften der Schmelzkleberfolie auf der Matrix in der Weise zu gewährleisten, daß sich die Schmelzkleberfolie entsprechend der Oberfläche der Matrix mit vergrößert.
Bei dem erfindungsgemäßen Verfahren ist somit kein zusätzlicher Arbeitsgang zum Aufkaschieren der Schmelzkleberfolie notwendig.

Nach einer weiteren vorteilhaften Ausgestaltung der Erfindung wird eine zweischichtige, an sich handelsübliche Schmelzkleberfolie verwendet, die auf ihrer einen Oberfläche besonders gute Hafteigenschaften zum polymeren Matrix-Material A und auf ihrer anderen Oberfläche besonders gute Hafteigenschaften zu dem polymeren Material B aufweist, welches zur späteren Aufkaschierung auf die nach dem erfindungsgemäßen Verfahren hergestellte Schaumstoffbahn vorgesehen ist. Die Verwendung von an sich bekannten zweischichtigen Schmelzkleberfolien hat sich bei dem erfindungsgemäßen Verfahren als besonders vorteilhaft herausgestellt, da hierbei besonders feste Verbindungen zwischen den verschiedenen Schaumstoffbahnen bzw. zwischen der erfindungsgemäß hergestellten Schaumstoffbahn und aufkaschierten Folien bzw. Platten ergeben haben.

Nach einer weiteren vorteilhaften Ausgestaltung der Erfindung wird eine mit schlitzförmigen Ausnehmungen versehene Schmelzkleberfolie verwendet, die sich beim thermischen Aufschäumen mit der Matrix besonders gleichmäßig vergrößert und eine Blasenbildung zwischen Schaumstoff und Schmelzkleberfolie verhindert.

Die Erfindung wird in folgenden anhand von Ausführungsbeispielen und der Zeichnung näher erläutert. Es zeigen

Figur 1          eine Anlage zur Herstellung von erfindungsgemäßen Schaumstoffbahnen,

Figur 2          eine perspektivische Ansicht der Schaumstoffmatrix mit Schmelzkleberfolie an der Stelle A-A gemäß Figur 1,

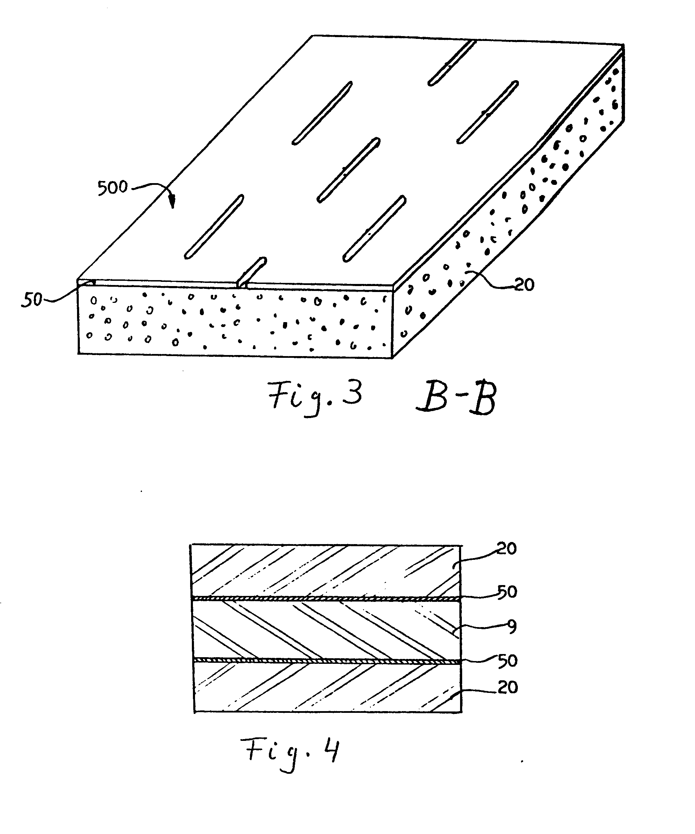

Figur 3          eine perspektivische Ansicht der Schaumstoffbahn an der Stelle B-B gemäß Figur 1,

Figur 4          eine mehrschichtige Aufsprungmatte.

Beispiel 1

Es soll eine Polyethylen-Schaumstoffbahn aus geschlossenzelligem, vernetzten Polyethylen mit einer Rohdichte von 30 kg/m$^3$ hergestellt werden. Die Polyethylen-Schaumstoffbahn ist zur Kaschierung mit PVC-Schaumstoffbahnen oder -Folien vorgesehen. Im beschriebenen Anwendungsbeispiel wird die erfindungsgemäß hergestellte Polyethylen-Schaumstoffbahn zur Herstellung einer mehrschichtigen Aufsprungmatte verwendet.

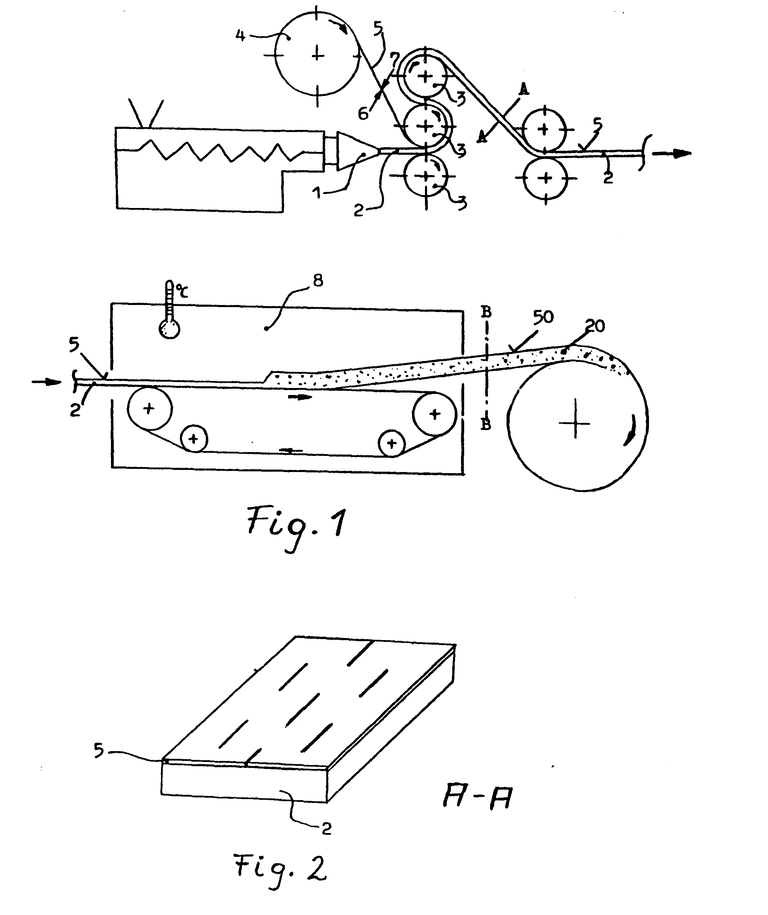

Figur 1 zeigt schematisch, wie mit Hilfe eines Breitschlitzwerkzeuges (1) eine Polyethylenbahn (2) (Matrix), die ein Vernetzungs- und ein Verschäumungsmittel enthält, kontinuierlich extrudiert wird. Die Dicke der extrudierten Bahn (2) beträgt etwa 3 mm. Die Extrusion erfolgt entsprechend dem Stand der Technik bei einer Temperatur, die unterhalb der für die Vernetzungs- und Verschäumungsreaktion notwendigen Temperaturen liegt. Nach der Extrusion wird die Matrix-Bahn (2) in einem

Glättkalander (3) geglättet. Über die Zuführeinrichtung (4) wird während dieses Glättvorganges eine zweischichtige Schmelzkleberfolie (5) auf die Matrix (2) aufgebracht. Durch die in der Matrix (2) vorhandene Restwärme haftet die Schmelzkleberfolie (5) an der Matrixbahn (2). Die im Ausführungsbeispiel verwendete, zweischichtige Schmelzkleberfolie (5) der Firma Xiro®, Typ V-193-1 besteht auf der Polyethylen-Seite (6) aus einem quaternären Olefin-Copolymer-Blend mit einem Schmelzpunkt von 90°C und einem Flächengewicht von etwa 48 g/m$^2$ und auf der PVC-Seite (7) aus einem Copolyester mit einem Schmelzpunkt von 126°C und einem Flächengewicht von 62 g/m$^2$.

Nach dem Glätten der Matrix-Bahn (2) wird diese zusammen mit der aufgebrachten Schmelzkleberfolie (5) in einem kontinuierlichen Schäumofen (8) vernetzt und aufgeschäumt. Hierbei vergrößert sich die Oberfläche der Polyethylen-Bahn und damit auch die Fläche der aufgebrachten Schmelzkleberfolie um einen Faktor von ca. 10. Nach dem Durchlaufen des Schäumofens beträgt die Rohdichte des Polyethylen-Schaums etwa 30 kg/m$^3$, die Dicke der Schaumstoffbahn ca. 9 mm und das Flächengewicht der an der Oberfläche der Polyethylen-Schaumstoffbahn (20) gleichmäßig verteilten Schmelzkleberfolie (50) ca. 11 g/m$^2$.

Die abgekühlte Schaumstoffbahn (20) ist an ihrer Oberfläche (500) nicht klebrig und kann ohne besondere Maßnahme aufgewickelt werden.

In einem zweiten Arbeitsgang kann die so erhaltene, im wesentlichen aus Polyethylen bestehende Schaumstoffbahn (20) zur direkten Kaschierung mit PVC-Schaumstoffbahnen oder -Folien verwendet werden.

In dem gewählten Anwendungsbeispiel ist vorgesehen, eine offenzellige PVC-Schaumstoffbahn (9) mit einer Rohdichte von 90 kg/m$^3$ und einer Dicke von 24 mm beidseitig mit einer erfindungsgemäß herge-

stellten Polyethylen-Schaumstoffbahn (20) zu kaschieren. Die Flammkaschierung der drei Schaumstoffbahnen erfolgt dabei mit einer Geschwindigkeit von ca. 14 m/min. Die Festigkeit der Verbindungen zwischen den Schaumstoffschichten ist dabei höher als die Festigkeit der einzelnen Schichten. Die aus dem Verbundstoff durch Zuschneiden erhaltenen mehrschichtigen Schaumstoffverbundkörper eignen sich insbesondere als Sport- und Aufsprungmatten. Fig. 4 zeigt eine solche Sportmatte in Schnitt.

Beispiel 2

Eine gemäß dem ersten Beispiel hergestellte, mit einer Schmelzkleberfolie versehene Polyethylen-Schaumstoffbahn wird mit einer ABS-Folie von 0,4 mm Dicke durch Flammkaschieren verbunden. Das so erhaltene Produkt kann durch Tiefziehen weiter verarbeitet werden.

Beispiel 3

Eine Polyethylen-Matrix wird erfindungsgemäß mit einer einschichtigen Schmelzkleberfolie aus quaternären Olefin-Copolymer-Blend mit einem Schmelzpunkt von 90°C und einem Flächengewicht von 40 g/m$^2$ (Fabrikat Xiro®) kaschiert und anschließend in einem Schäumofen aufgeschäumt, so daß ein Polyethylen-Schaumstoff mit einer Rohdichte von 100 kg/m$^3$ erhalten wird. Dieser Polyethylen-Schaumstoff wird an seiner mit der Schmelzkleberfolie versehenen Oberfläche mit einem textilen Polyestergewirke kaschiert. Das so hergestellte Flächengebilde kann durch Tiefziehen zu Auskleidungs-Formkörpern verwendet werden.

Das erfindungsgemäße Verfahren ist anwendbar auf nahezu alle thermisch aufgeschäumten Schaumstoffe wie z.B. Polyethylen-, PVC-, Polypropylen-Schaumstoffen.

Neben der bevorzugten kontinuierlichen Arbeitsweise ist es auch möglich, die Schaumstoff-Matrizes diskontinuierlich mit einer Schmelzkleberfolie zu kaschieren und anschließend aufzuschäumen.

- 1 -

**Patentansprüche**

1. Verfahren zur Herstellung einer im wesentlichen aus einem polymeren Material A bestehenden Schaumstoffbahn oder -matte, die zur direkten Kaschierung, insbesondere Flammkaschierung, mit weiteren Bahnen oder Matten auch aus solchen Materialien B geeignet ist, die sich gewöhnlich zur direkten Kaschierung mit Schaumstoffbahnen oder -matten aus einem Material A nicht eignen, durch thermisches Aufschäumen aus einer sogenannten, im wesentlichen aus dem polymeren Material A bestehenden Matrix, d a d u r c h   g e k e n n z e i c h n e t , daß die Matrix vor dem thermischen Schäumen auf wenigstens einer ihrer Oberflächen mit einer Schmelzkleberfolie kaschiert wird, die beim Schäumen entsprechend der Oberfläche der Matrix expandierbar ist, so daß die so hergestellte Schaumstoffbahn oder -matte direkt mit weiteren Bahnen oder -matten auch aus einem Material B kaschiert werden kann.

2. Verfahren nach Anspruch 1, dadurch gekennzeichnet, daß die Schmelzkleberfolie während der Herstellung der Schaumstoffmatrix unter Ausnutzung der in der Matrix vorhandenen Wärme mit dieser kaschiert wird.

3. Verfahren nach Anspruch 1 oder 2, dadurch gekennzeichnet, daß eine mehrschichtige, insbesondere zweischichtige Schmelzkleberfolie verwendet wird.

4. Verfahren nach einem der Ansprüche 1 bis 3, dadurch gekennzeichnet, daß eine durchbrochene, insbesondere mit schlitzförmigen Ausnehmungen versehene Schmelzkleberfolie verwendet wird.

Fig. 1

A-A

Fig. 2

500

50

20

Fig. 3    B-B

20

50

9

50

20

Fig. 4